# NOUVEAU FASCICULE DE BREVET EUROPEEN

(11) **EP 0 651 704 B2**
(45) Date de publication et mention de la décision concernant l'opposition: **23.08.2000**
(45) Mention de la délivrance du brevet: 11.12.1996
(21) Numéro de dépôt: 94916270.5
(22) Date de dépôt: 11.05.1994
(51) Int. Cl.: B60N 2/02

(54) **DISPOSITIF DE COMMANDE DE POSITIONS D'AXES DE DEPLACEMENT**
VORRICHTUNG ZUM STEUERN VON POSITIONEN VON BEWEGUNGSACHSEN
DEVICE FOR CONTROLLING THE POSITION OF ACTUATING SHAFTS

(30) Priorité: 18.05.1993 FR 9305999
(43) Date de publication de la demande: 10.05.1995
(73) Titulaire: DAV, F-74106 Annemasse Cédex (FR); BERTRAND FAURE EQUIPEMENTS S.A., 92100 Boulogne (FR)
(72) Inventeur: LEPINE, Gérard, F-74250 Peillonex (FR); LEROY, Yannick, F-14100 Lisieux (FR)
(74) Mandataire: Levy, David
(86) Numéro de dépôt international: FR9400560
(87) Numéro de publication internationale: WO9426552

(56) Documents cités:
- EP-A- 0 335 352
- EP-A- 0 449 688
- EP-A- 0 474 904
- DE-C- 3 034 188
- GB-A- 2 034 923
- GB-A- 2 072 881
- US-A- 4 473 786
- US-A- 4 907 153
- US-A- 5 003 836

## Description

La présente invention concerne d'une manière générale un dispositif de commande de positions d'axes de déplacement et, plus particulièrement un dispositif de commande asservie des axes de déplacement d'un siège de véhicule avec des fonctions électroniques telles que la mémorisation des positions des axes de déplacement.

Les sièges avant d'un véhicule sont réglables dans plusieurs directions. Par siège de véhicule, on entend aussi bien le siège ou assise proprement dit sur lequel est assis le conducteur ou le passager, que le dossier. L'assise et le dossier sont réglables, indépendamment l'un de l'autre, dans plusieurs directions. A chaque déplacement ou mouvement du siège sont associés un moteur d'entraînement et un capteur de position, ces derniers étant commandés par une électronique qui est capable par exemple de mémoriser les diverses positions du siège, de manière à permettre à l'utilisateur, par une simple touche de commande, de rappeler le siège à une position prédéterminée et préalablement mémorisée.

Plusieurs types de capteurs de position sont actuellement utilisés.

Le premier tue de capteur de position est électromécanique et comprend soit un frotteur soit un potentiomètre, la position de l'axe de mouvement étant repérée, dans le cas du potentiomètre, par la valeur résistive de ce dernier, à l'aide d'un curseur qui est relié au moteur et qui constitue l'élément mobile.

Un deuxième type de capteur de position peut être optique, avec un émetteur-récepteur à infrarouge, l'élément mobile et de liaison avec le moteur étant constitué par une roue dentée.

Un troisième type de capteur de position utilise un interrupteur à lame souple, l'élément mobile et de liaison étant alors un aimant multipolaire.

Enfin un quatrième type de capteur de position, est à effet Hall avec, comme élément mobile et de liaison, un aimant multipolaire.

Diverses solutions utilisant un capteur à effet Hall sont préconisées.

Une première solution consiste à monter le capteur sur un réducteur qui est relié au moteur par une âme métallique, généralement de section carrée et disposée dans une gaine, l'axe de sortie du réducteur constitue un axe de déplacement du siège dans une position donnée et qui est mémorisée par une électronique appropriée ; l'ensemble gaine et âme métallique constituent ce qu'on appelle un flexible. Dans ce cas, il est prévu un bout d'arbre en sortie de réducteur pour l'entraînement de l'aimant multipolaire du capteur.

Une deuxième solution consiste à monter le capteur à l'extrémité du carter du moteur opposée à celle recevant le flexible qui relie ledit moteur au réducteur. Dans ce cas également, un bout d'arbre est prévu pour assurer la liaison de l'aimant du capteur avec le moteur.

Dans la première solution, on utilise un aimant comportant obligatoirement un grand nombre de paires de pôles, nécessaires pour la détection avec une bonne précision de la position du siège, un bout d'arbre pour l'entraînement de l'aimant, et au moins deux séries de liaisons entre l'électronique de commande et de mémorisation et le capteur de position d'une part, et le moteur d'autre part. Ceci implique un connecteur à au moins cinq voies entre l'électronique de commande et de mémorisation et une très grande régularité dimensionnelle des secteurs Nord et Sud de l'aimant de manière à obtenir un signal délivré par le capteur qui soit répétitif, faute de quoi la position du siège ne serait pas exacte. En effet, la vitesse de rotation en sortie de réducteur étant faible, il faut utiliser des aimants à grand nombre de pôles afin d'augmenter la précision de positionnement, mais l'inconvénient est que, lorsque ce nombre de pôles est grand, alors la régularité des segments magnétiques devient incertaine ; de plus, il est alors nécessaire de disposer d'une plus grande puissance d'énergie et de placer l'aiment très près du capteur à effet Hall. Pour remédier à cet inconvénient il faudrait augmenter l'épaisseur ou le diamètre de l'aiment, solution incompatible avec les exigences de miniaturisation du fait du faible espace disponible dans les véhicules automobiles.

Des commandes de siège sont décrites dans GB-A-2 072 881 et EP 0 449 688.

Dans EP-0 449 688, la commande est réalisée au moyen de vis et de roues dentées qui sont relativement de fabrication complexe, sans possibilité de mémorisation des positions du siège ou d'une partie de siège mobile.

Dans GB-A-2 072 881 qui constitue l'art antérieur le plus proche, le capteur de position est un capteur optique qui est monté sur et traversé par une tige de commande du moteur, le préambule de la revendication 1 se référant à ce brevet. Toutefois, en raison de la structure particulière de la commande, il n'y a pas de boîte d'interconnexion dans laquelle sont montés le capteur de position ainsi que les connexions et le circuit de commande, ladite boîte d'interconnexion constituant une interface entre le moteur et le circuit de commande, laquelle caractéristique fait l'objet de la partie caractérisante de la revendication 1.

La présente invention a pour but de remédier aux inconvénients précités et de proposer un dispositif de commande et de détection de positions qui soit très compact donc occupant moins de place, nécessitant moins de liaisons électriques, et augmentant ainsi la fiabilité du système.

La présente invention a pour objet un dispositif de commande de positions d'au moins un axe de déplacement, tel que défini dans la revendication 1.

Un avantage de la présente invention réside dans le fait que toutes les liaisons électriques et mécaniques sont effectuées à travers et par l'intermédiaire d'une interface électrique et mécanique.

D'autres avantages et caractéristiques apparaîtront à la lecture de plusieurs modes de réalisation du dispositif selon l'invention, ainsi que des dessins annexés sur lesquels :
La figure 1 est une vue éclatée en perspective d'un mode de réalisation du dispositif selon l'invention.
La figure 2 est une vue éclatée en perspective du boîtier d'interconnexion constituant l'interface.
La figure 3 est une vue en coupe selon lll-lll du boîtier représenté sur la figure 2.
La figure 4 est une représentation schématique de la partie électrique du dispositif, suivant un premier mode de réalisation de l'invention.
La figure 5 est une représentation schématique de la partie électrique du dispositif, suivant un deuxième mode de réalisation de l'invention.
La figure 6 est une représentation schématique d'un groupement possible de couples moteur-capteur de position.

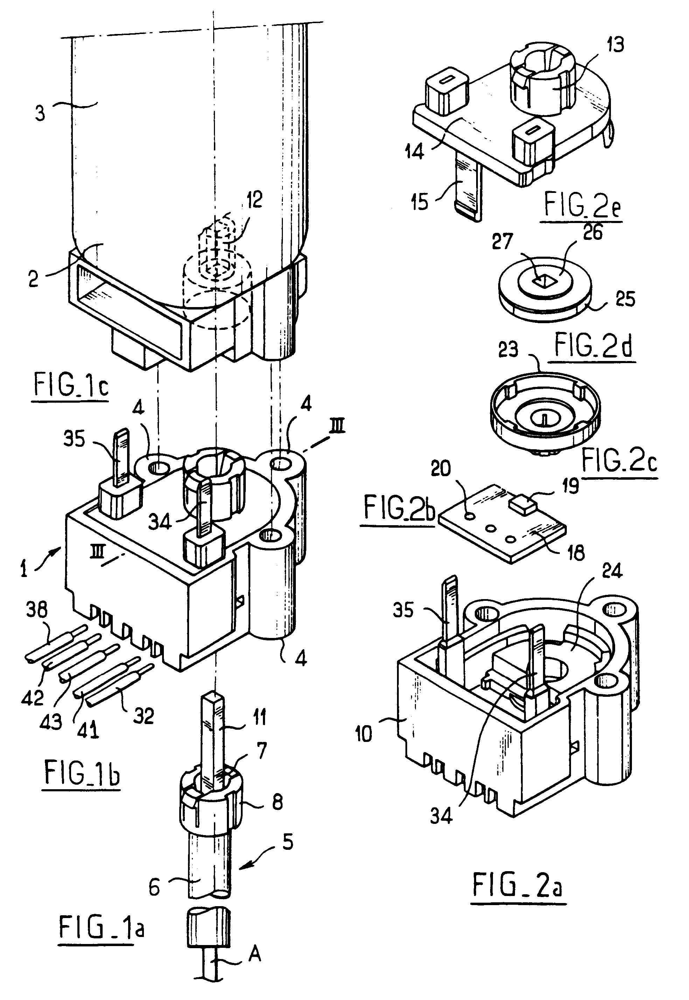

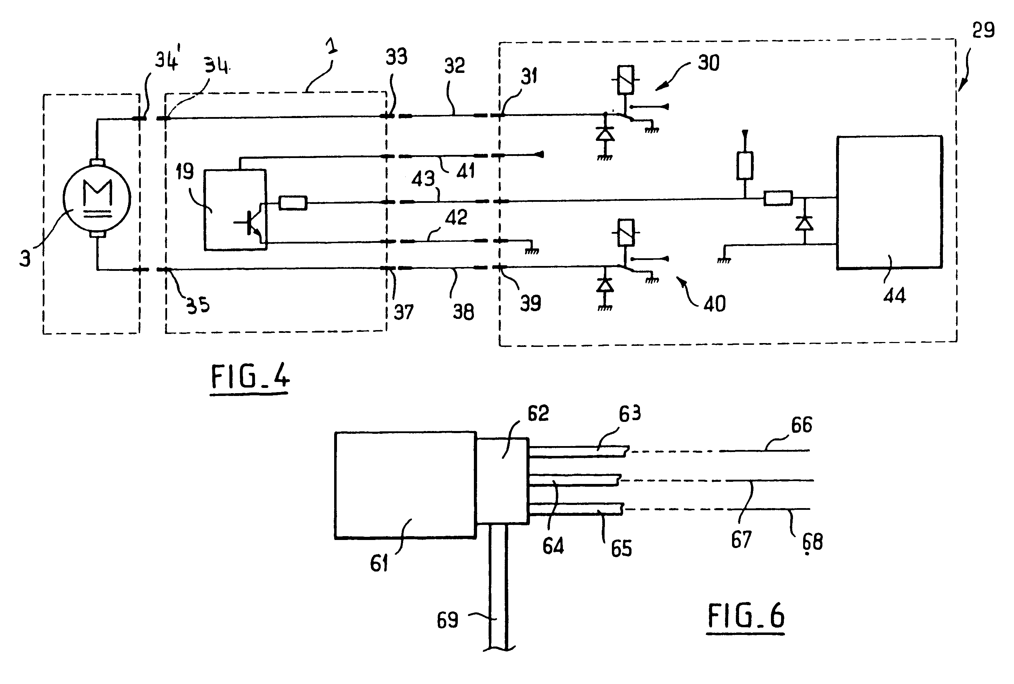

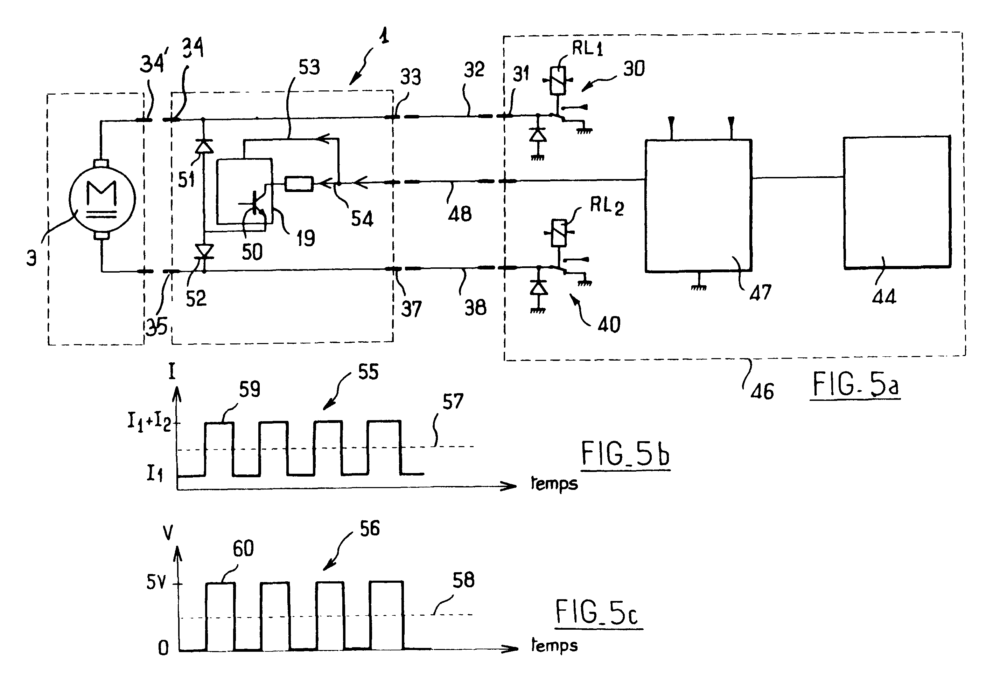

Le dispositif selon l'invention comprend un boîtier d'interconnexion 1 qui est représenté sur les figures 1 à 3 et qui présente la particularité de constituer une interface entre un moteur d'entraînement connu en soi, et un circuit de commande qui est représenté schématiquement sur les figures 4 et 5. De ce fait, il n'est plus nécessaire de prévoir un connecteur spécifique pour réaliser les diverses connexions entre le circuit de commande, le moteur et le capteur de position qui est disposé dans le boîtier 1, lesdites connexions étant maintenant réalisées directement à travers le boîtier 1 et dans certains cas par l'intermédiaire du capteur de position, comme cela est décrit ci-après.

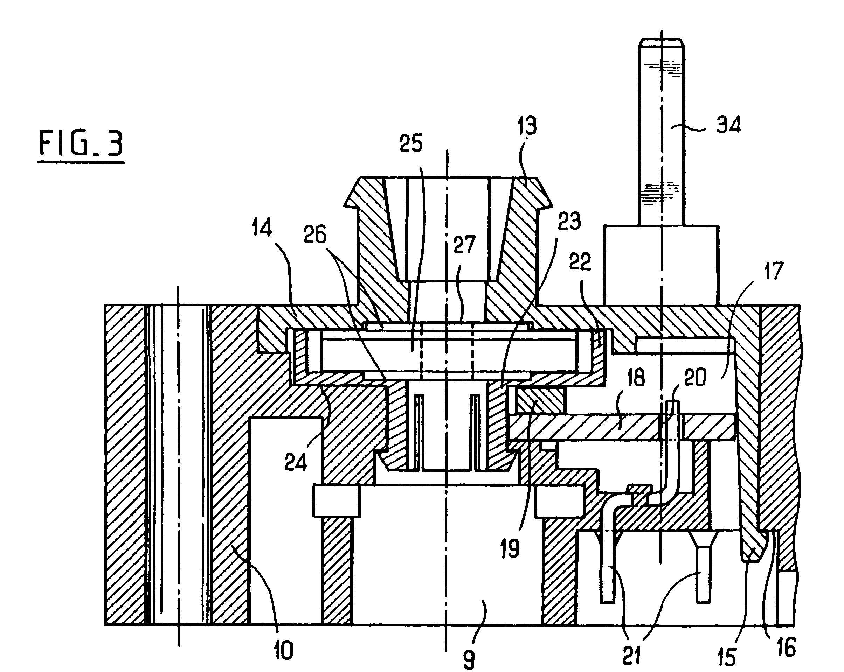

Le boîtier 1 est monté à une extrémité 2 d'un moteur 3, la fixation étant effectuée par tout moyen approprié, tel que des vis ou boulons s'insérant dans des oreilles 4 et se vissant dans des alésages taraudés ou non, ménagés dans le carter du moteur. Un flexible 5 comprenant une gaine 6 et une âme interne métallique ou tige d'entraînement 7, de section carrée aux extrémités par exemple, relie le moteur 3 à un réducteur de vitesse solidaire de l'axe d'entraînement du siège, non représenté. Le flexible 5 comporte un embout 8 qui est logé et fixé, par exemple par clipsage dans un logement 9 ménagé dans l'embase 10 du boîtier 1 (figure 3). L'âme 7 traverse totalement le bottier 1, son extrémité 11 étant reliée à l'arbre d'entraînement du moteur 3, de manière usuelle, une telle liaison étant schématiquement matérialisée par la référence 12. Un embout 13, prévu sur le couvercle 14 du boîtier 1, est inséré dans un évidement ménagé dans l'extrémité 2 du moteur, de manière à constituer également un guidage pour l'âme interne 7 du flexible 5 lors de sa liaison avec le moteur 3. Le couvercle 14 est rendu solidaire de l'embase 10 au moyen d'une languette de clipsage souple 15 qui vient en appui sur un rebord d'appui et de blocage 16 ménagé sur un côté de ladite embase 10.

Le capteur de position qui est du type à effet Hall comporte un récepteur 19 et un générateur 25 d'information représentative du déplacement et/ou de la position de l'axe de déplacement A, ce dernier pouvant être constitué, par exemple d'une vis d'un mécanisme de déplacement d'un siège.

Dans un espace latéral 17 de l'embase 10 est monté un circuit imprimé 18 sur lequel est fixé le récepteur à effet Hall 19, le circuit imprimé 18 étant pourvu de passages 20 pour le montage et la fixation de lames de connexion 21 (figure 3).

Une enveloppe 22 munie d'un embout de positionnement et de fixation 23, est montée sur une zone de réception 24 de l'embase 10. L'enveloppe 22 constitue une protection pour le récepteur à effet Hall 19 et un logement pour le générateur 25 qui est constitué par un aimant associé audit récepteur à effet Hall 19, une bague de guidage 26 pour l'aimant étant également prévue. L'aimant 25 comprend seulement une paire de pôles et il est entraîné par le moteur 3, par l'intermédiaire de l'âme interne 7 du flexible 5 et de la bague 26 qui est pourvue d'un orifice 27 à section carrée. L'utilisation d'un aimant 25 à deux pôles, un Nord et un Sud permet de le fabriquer plus facilement et à un moindre coût, notamment par le fait que les secteurs Nord et Sud sont plus faciles à réaliser, la vitesse de rotation élevée dudit aimant imposée par le moteur 3 assurant une bonne précision du positionnement du siège. Par ailleurs, le capteur de position à effet Hall utilisé peut être du type unipolaire ou bipolaire, alors que dans les solutions antérieures, seul un capteur de position à effet Hall bipolaire pouvait être utilisé avec un aimant à grand nombre de pôles. De plus, le récepteur 19 peut être positionné à une relative plus grande distance de l'aimant (25), ce qui permet, comme dans le cas représenté sur les figures, de le disposer sous l'enveloppe 22, cette dernière constituant ainsi une protection pour le récepteur 19.

Le circuit de commande 29, dans un premier mode de réalisation représenté sur la figure 4, commande le moteur 3 à travers le boîtier 1 qui sert ainsi de connecteur ou d'interface de connexion entre lesdits circuit de commande et moteur. L'alimentation du moteur, par exemple à partir de la batterie du véhicule, est réalisée par un sous-ensemble d'alimentation 30 dont le connecteur de sortie est schématiquement représenté et désigné par la référence 31. Un conducteur 32 relie le connecteur 31 au connecteur 33 et à la languette de connexion correspondante 34 qui est enfichée dans un réceptacle ou tout autre organe de connexion du moteur 3 et désigné schématiquement par la référence 34'. Le retour à la masse du moteur est effectué par l'intermédiaire de l'autre languette de connexion 35 du boîtier d'interconnexion 1, un connecteur 37, un conducteur 38, un connecteur 39 et un sous-ensemble 40. Les liaisons 32, 38, 41, 42, 43 peuvent également être serties ou soudées au boîtier 1.

L'alimentation du récepteur 19 est réalisée à partir d'une alimentation 5V, à partir du circuit de commande 29 et un conducteur ou autre organe de liaison 41, le retour à la masse étant assuré par le conducteur 42. Le signal délivré par le récepteur 19 passe à travers une résistance R de faible valeur, par exemple de 500, comparée à celle de R₁ qui est de quelques k. La résistance R limite le courant dans le récepteur 19 en cas de court circuit accidentel du signal capteur. Un conducteur 43 relie la résistance R à un microprocesseur 44 à travers le sous-ensemble 45 comprenant notamment les résistances R₁ et R₂.

Le circuit de commande 46, tel que représenté sur la figure 5, est perfectionné par rapport au circuit de commande 29 de la figure 4, par le fait que les conducteurs d'alimentation du récepteur 19 sont supprimés. Un convertisseur courant-tension 47 reçoit deux alimentations de 12V et 5V, l'alimentation 12V étant destinée à alimenter le récepteur 19 a travers un shunt de faible valeur (non représenté) et par l'intermédiaire d'un conducteur 48 connecté entre le circuit de commande 46 et le boîtier 1. Les éléments qui sont identiques au mode de réalisation représenté sur la figure 4 sont désignés par les mêmes références. Quels que soient les états du transistor 50 du capteur de position, la tension d'alimentation, diminuée de la chute de tension aux bornes du shunt, est appliquée sur le capteur Hall 19,25, le retour à la masse de ce dernier étant réalisée par l'intermédiaire de l'une des deux diodes 51,52 montées en opposition, entre les éléments de connexion 34 et 35, et l'un des relais RL₁ et RL₂ des sous-ensembles 30,40, sachant que les relais RL₁ et RL₂ ne sont jamais actionnés simutanément. Lorsque le transistor 50 n'est pas passant, c'est-à-dire lorsque le pôle Nord de l'aiment 25 est en regard du récepteur 19, la tension d'alimentation passe par la branche 53dans laquelle circule constamment un courant l₁. Chaque fois que le pôle Sud de l'aiment 25 est en regard du récepteur 19, un courant l₂ circule dans la branche 54 à travers la résistance R. Le convertisseur courant-tension 47 fournit au microprocesseur 44 un zéro lorsque le courant est égal à l₁ et la tension 5V lorsque le courant est égale à l = l₁ + l₂.

Les courbes 55 et 56 représentent respectivement les signaux délivrés par le récepteur 19 et reçus sur le microprocesseur 44, en fonction du temps. Dans les deux cas un seuil de détection en courant 57 et un seuil de détection en tension 58 sont prévus. A ume impulsion 59 délivrée par le récepteur 19 et de valeur l = l₁ + l_{2,} correspond une impulsion 60 délivrée par le convertisseur 47 au microprocesseur 44. Le microprocesseur 44 compte et mémorise les impulsions 60.

Lorsque l'utilisateur souhaite amener une partie du siège occupant une position donnée P₁, correspondant à un certain nombre mémorisé N₁ d'impulsions 60, à une position P₂ correspondant à un nombre mémorisé N₂ d'impulsions, le comparateur du microprocesseur 44 compare N₂ avec N₁. Suivant que N₂ est plus grand ou plus petit que N₁, le microprocesseur 44 commande alors la rotation du moteur 3 dans un sens ou dans l'autre, de façon que l'axe de déplacement, entraîné par le moteur et associé à ladite partie de siège, soit amené dans la position souhaitée.

A chaque direction de déplacement d'une partie du siège, sont associés un couple moteur 3-interface mécanique et électrique 49. Grâce à la présente invention et notamment au fait que le boîtier 1 et son capteur de position constitue une interface mécanique et électrique, il devient possible de regrouper plusieurs couples moteur-interface et de les commander à l'aide d'un seul circuit de commande 46. C'est ce qui est représenté très schématiquement sur la figure 6. Le bloc 61 représente, par exemple, un groupement de trois moteurs, le bloc 62 représentant un boîtier de connexion mécanique et électrique comprenant trois capteurs de position. A chaque capteur de position est associé un flexible dont l'âme interne commande le déplacement d'un axe de déplacement, les références 63 à 65 désignant les flexibles et les références 66 à 68 désignant les axes de déplacement. Un faisceau 69 de conducteurs est connecté au bloc 62. Le nombre de ces conducteurs peut être variable suivant le principe de regroupement des connexions qui sera retenu.

Dans une forme de réalisation préférée de l'invention, l'ensemble constitué par le capteur à effet Hall avec ses connexions électriques entre moteur et circuit de commande, est logé dans le boîtier d'interconnexion, lequel boîtier d'interconnexion est directement monté à l'extrémité du moteur commandant un ou plusieurs mécanismes de siège de véhicule.

## Revendications

1. Dispositif de commande de positions d'au moins un axe de déplacement (A), d'un mécanisme de siege de vehicule, du type comprenant un moteur d'entraînement (3), une tige d'entraînement (7) reliée audit moteur et interposée entre ledit moteur d'entraînement (3) et ledit axe de déplacement, un circuit de commande (29, 46) du moteur (3), et un capteur de position comportant un récepteur (19) et un générateur d'information (25) qui est représentative du déplacement et/ou de la position dudit axe de déplacement, ledit capteur de position (19, 25) étant monté à proximité du moteur et du côté d'une extrémité de la tige d'entraînement (7) et le générateur (25) étant monté sur et entraîné par ladite tige d'entraînement (7), caractérisé en ce que le capteur de position (19, 25) et les connexions électriques entre le moteur, le capteur et le circuit de commande sont logés dans un boîtier d'interconnexion (1) qui constitue une interface entre le moteur et le circuit de commande (29, 46), de sorte que l'axe du moteur (3), le boîtier (1) et l'axe de déplacement (A) sont alignés, et en ce que la tige d'entraînement (7) est disposée dans une gaine (6) de manière à constituer un flexible (5).

2. Dispositif selon la revendication 1, caractérisé en ce que le capteur de position (19, 25) est à effet Hall dont le générateur est constitué par un aimant (25) à au moins deux pôles.

3. Dispositif selon la revendication 2, caractérisé en ce qu'une enveloppe de protection (22) est interposée entre l'aimant (25) et le récepteur (19).

4. Dispositif selon l'une des revendications 1 ou 2, caractérisé en ce qu'il comprend en outre deux diodes (51, 52) en opposition montées sur des conducteurs (34, 36) d'alimentation et de retour à la masse du moteur, et en ce que l'alimentation du capteur de position est assurée par l'intermédiaire du conducteur de signal dudit capteur à effet Hall.

5. Dispositif selon la revendication 4, caractérisé en ce que le conducteur d'alimentation et de signal du capteur à effet Hall est connecté à un convertisseur courant-tension (47) qui délivre les impulsions du capteur à effet Hall à un microprocesseur (44) qui notamment compte et mémorise les impulsions délivrées par ledit convertisseur courant-tension.

6. Dispositif selon la revendication 1, caractérisé en ce que le nombre de conducteurs entre le circuit de commande et l'interface est limité à trois seulement (32, 48, 38).

7. Dispositif selon la revendication 1, caractérisé en ce qu'un même boîtier d'interconnexion (62) est associé à plusieurs axes de déplacement d'un siège de véhicule.

## Patentansprüche

1. Vorrichtung zur Positionssteuerung von wenigstens einer Verstellachse (A) eines Fahrzeugsitzmechanismus, vom Typ mit einem Antriebsmotor (3), einer Antriebsstange (7), die mit dem Motor verbunden und zwischen dem Antriebsmotor (3) und der Verstellachse angeordnet ist, einem Steuerkreis (29, 46) des Motors (3) und einem Positionsgeber mit einem Empfänger (19) und einem Informationsgenerator (25) zur Erzeugung einer Information, die für die Verstellung und/oder die Position der Verstellachse charakteristisch ist, wobei der Positionsgeber (19, 25) nahe dem Motor und auf der Seite eines Endes der Antriebsstange angeordnet ist, und der Generator (15) auf der Antriebsstange (7) angeordnet und von dieser angetrieben ist,
**dadurch gekennzeichnet**, **daß**
der Positionsgeber (19, 25) und die elektrischen Verbindungen zwischen dem Motor, dem Geber und dem Steuerkreis in einem Verbindungsgehäuse (1) angeordnet sind, das ein Interface zwischen dem Motor und den Steuerkreisen (29, 46) bildet, so daß die Achse des Motors (3), das Gehäuse (1) und die Verstellachse (A) fluchten, und daß die Antriebsstange (7) derart in einer Hülle (6) angeordnet ist, daß ein flexibler Schlauch (5) gebildet wird.

2. Vorrichtung nach Anspruch 1,
**dadurch gekennzeichnet, daß**
der Positionsgeber (19, 25) mit Hall-Effekt ausgebildet ist, dessen Generator von einem Magneten (25) mit wenigstens zwei Polen gebildet ist.

3. Vorrichtung nach Anspruch 2,
**dadurch gekennzeichnet, daß**
eine Schutzhülle (22) zwischen dem Magneten (25) und dem Empfänger (19) angeordnet ist.

4. Vorrichtung nach Anspruch 1 oder 2,
**dadurch gekennzeichnet, daß**
sie außerdem zwei Dioden (51, 51) aufweist, die gegensinnig an Speise- und Masserückleitungen (34, 36) des Motors angeschlossen sind, und daß die Versorgung des Positionsgebers mittels eines Signalleiters des Halleffektgebers erfolgt.

5. Vorrichtung nach Anspruch 4
**dadurch gekennzeichnet, daß**
der Speise- und Signalleiter des Halleffektgebers an einen Strom/Spannungswandler (47) angeschlossen ist, der die Impulse des Halleffektgebers an einen Mikroprozessor abgibt, der die vom Strom/Spannungswandler abgegebenen Impulse insbesondere zählt und speichert.

6. Vorrichtung nach Anspruch 1,
**dadurch gekennzeichnet, daß**
die Anzahl der Leiter zwischen dem Steuerkreis und dem Interface auf nur drei (32, 48, 38) begrenzt ist.

7. Vorrichtung nach Anspruch 1,
**dadurch gekennzeichnet, daß**
ein einziges Verbindungsgehäuse (62) mehreren Verstellachsen eines Fahrzeugsitzes zugeordnet ist.

## Claims

1. Device for controlling the position of at least one shifting shaft (A) of a vehicle seat mechanism, of the type comprising a driving motor (3), a driving shaft (7) connected to said motor and interposed between said driving motor (3) and said shifting shaft, a circuit (29, 46) for controlling the motor (3) and a position sensor comprising a receiver (19) and a generator of information (25) which represents the displacement and/or the position of said shifting shaft, said position sensor (19, 25) being mounted in proximity to the motor and adjacent to an end of the driving shaft (7) and the generator (25) being mounted on and driven by said driving shaft (7), characterized in that the position sensor (19, 25) and the electric connections between the motor, the sensor and the control circuit are housed in an interconnection box (1) which constitutes an interface between the motor and the control circuit (29, 46), whereby the motor (3) axis, the box (1) and the shifting shaft (A) are in alignment, and in that the driving shaft (7) is disposed in a sheath (6) and constitutes a sheathed flexible shaft (5).

2. Device according to claim 1, characterized in that the position sensor (19, 25) employs the Hall-effect and comprises a generator constituted by a magnet (25) having at least two poles.

3. Device according to claim 2, characterized in that a protective case (22) is interposed between the magnet (25) and the receiver (19).

4. Device according to claim 1 or 2, characterized in that it further comprises two diodes (51, 52) in opposition connected in the supply and earth conductors (34, 36) of the motor, and the position sensor is supplied through a signal conductor of said Hall-effect sensor.

5. Device according to claim 4, characterized in that the supply and signal conductor of the Hall-effect sensor is connected to a current-voltage converter (47) which delivers the pulses of the Hall-effect sensor to a microprocessor (44) which in particular counts and stores the pulses delivered by said current-voltage converter.

6. Device according to claim 1, characterized in that the number of conductors between the control circuit and the interface is limited to merely three (32, 48, 38).

7. Device according to claim 1, characterized in that the same interconnection box (62) is associated with a plurality of shifting shafts of a vehicle seat unit.
